# EUROPEAN PATENT SPECIFICATION

(11) **EP 2 516 827 B1**
(45) Date of publication and mention of the grant of the patent: **13.07.2016**
(21) Application number: 10805706.8
(22) Date of filing: 23.12.2010
(51) Int. Cl.: F02C 6/16, F03B 1/00

(54) **COMPRESSED AIR ENERGY STORAGE SYSTEM**
DRUCKLUFTENERGIESPEICHERSYSTEM
SYSTÈME DE STOCKAGE D'ÉNERGIE D'AIR COMPRIMÉ

(30) Priority: 23.12.2009 GB 0922517
(43) Date of publication of application: 31.10.2012
(73) Proprietor: Global Power And Energy Limited, Bromsgrove, Worcestershire B61 8HQ (GB)
(72) Inventor: BOWERS, Peter James, Birmingham West Midlands B26 3QJ (GB); PETERS, Phillip Stephen, Birmingham West Midlands B26 3QJ (GB)
(74) Representative: Foot, Paul Matthew James
(86) International application number: PCT/EP2010/070668
(87) International publication number: WO 2011/076926

(56) References cited:
- WO-A1-2007/066117
- DE-A1- 2 636 417
- DE-A1- 3 440 579
- GB-A- 2 013 318
- US-A- 2 433 896
- US-A- 4 150 547
- US-A1- 2009 158 740

## Description

The present invention relates to a compressed air energy storage (CAES) system, particularly, but not exclusively, capable of storing excess energy obtained from a renewable source to provide additional electricity to the grid when required. The present invention also relates to a combined compressed air energy storage system and generator.

Renewable energy such as that generated by wind, sunlight or tides is recognised as a valuable source of electricity. However, there are problems with utilising such sources, as supply can be intermittent and does not necessarily correspond with times of peak electricity demand. It is known, therefore, to store renewable energy in some form so that it may be used when required.

One such known method of storage is an adiabatic CAES plant that uses excess power from the grid or renewable energy to operate an electric motor in order to drive a compressor. Compressed air is cooled and used to fill some form of reservoir, often an underground cavern, to a pressure of around 6000 to 7500 kPa (60 to 75 bar). At times of peak demand, compressed air is drawn from the cavern, heated and then supplied to a modified gas turbine. The energy from the compressed air, together with that supplied from combustion processes, drives the turbine, thus producing electricity via an electrical generator. The electricity is then supplied to the grid.

It is also known to extract heat energy from the compressed air before it enters the reservoir, and store it in a thermal energy store. When energy is required by the grid, the heat energy is returned to the compressed air before it is used to drive the turbine.

US4150547 discloses a compressed air power plant where compressed air may be stored underground. US2433896 discloses fluid storage for power generation. DE2636417 shows a compressed air system for storing and using energy.

Known CAES systems do not operate with optimum efficiency. Fast start up of the expansion turbine is desirable in order to react to spikes in electricity demand. This can be more easily achieved by rotation of and pre-heating of the turbine, which requires increased energy input, adversely affecting efficiency. The thermal energy store is central to the overall efficiency of the CAES plant, and existing thermal energy stores provide unsatisfactory levels of efficiency.

It is desirable to provide an adiabatic CAES system having improved efficiency due to more effective thermal energy storage and turbine pre-heating. It is also desirable to provide a combined CAES system and generator, as a further increase in efficiency may be achieved by developing electricity via kinetic energy from water pressurised by compressed air, rather than directly from the compressed air itself.

According to the present invention there is provided a compressed air energy storage system for supplying pressurised fluid to a turbine to generate electricity, comprising at least one compressor for compressing air, a thermal energy recovery system for recovering the heat of compression from the air, a thermal energy store, a compressed air energy store, a thermal energy introduction system to reintroduce at least a portion of the heat to the air downstream of the compressed air energy store and a compressed air flow path connecting the at least one compressor and the compressed air energy store, at least one water tank and a liquid flow path connecting the at least one water tank to a turbine, where the compressed air is configured to pressurise the water and the pressurised water is configured to drive the turbine.

The compressed air energy storage system may further comprise at least one turbine, which would preferably be a Pelton turbine or similar. Preferably, the compressed air energy storage system also includes at least one hydraulic shock absorber associated with the at least one turbine.

Thermal energy from the thermal energy store may be supplied to pre-heat the turbine. The thermal energy store may comprise a solid heat storage material, preferably dried and settled salt deposits, or may comprise a liquid, preferably water.

The at least one compressor of the compressed air energy storage system may be a reciprocating compressor.

The system comprises a thermal energy recovery system for recovering the heat of compression from the air. The thermal energy recovery system preferably includes a recovery device for extracting excess heat directly from the body of the compressor, a heat exchanger to recover heat from the compressed air and/or a portion of the flow path, arranged to pass through the thermal energy store. The heat exchanger may be an after-cooler located downstream of the thermal energy store.

A portion of the thermal energy obtained from the thermal energy recovery system may be supplied to pre-heat the turbine, which may be configured to be driven by compressed air.

There is also provided a method of operating a compressed air energy storage system according to claim 12.

In step a), thermal energy may be recovered directly from the body of the compressor, preferably by means of water circulation. There may be a further step of selectively using the thermal energy recovered to preheat the turbine.

Preferred embodiments of the invention are now described with reference to the accompanying drawings in which:
Figure 1 shows a schematic diagram of the CAES system according to a first embodiment not falling under the claimed invention;
Figure 2 shows a flow diagram of a storage phase of the CAES process of the first embodiment;
Figure 3 shows a flow diagram of a generation phase of the CAES process of the first embodiment;
Figure 4 shows a schematic diagram of a CAES system with generator according to a second embodiment falling under the claimed invention;
Figure 5 shows a flow diagram of a storage phase of a CAES process according to the embodiment of figure 4; and
Figure 6 shows a flow diagram of a generation phase of a CAES process according to the embodiment of figure 4.

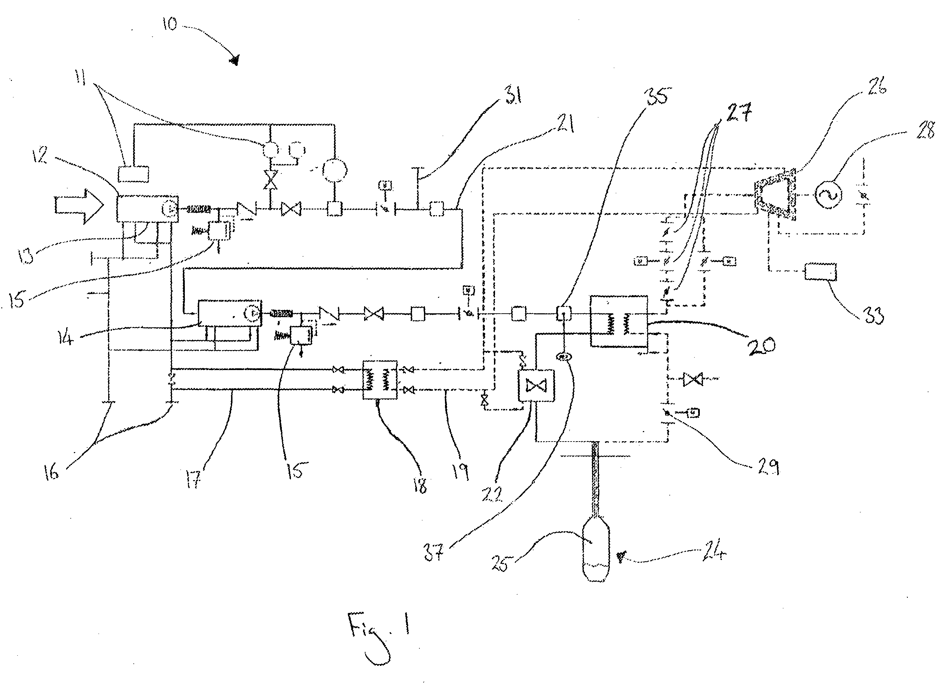

With reference to figure 1, the compressed air energy system 10 comprises a low pressure compressor 12, a high pressure compressor 14 in series with the low pressure compressor 12, a heat recovery unit 18, a thermal energy store 20, an after-cooler 22, a compressed air energy store 24 a series of regulating valves 29, 27 and at least one turbine 26. The compressors 12, 14, the thermal energy store 20, the after-cooler 22, the compressed air energy store 24, the regulating valves 29, 27 and the at least one turbine 26 are linked together in series by a compressed air flow path 21. The compressors 12 and 14 are powered by an electric motor (not shown) and are regulated by a controller 11.

There are a number of compressors 12, 14 suitable for this application, including oil lubricated, oil free, vane compressors, and high pressure reciprocating compressors. In this embodiment, the low pressure compressor 12 is an axial compressor while the high pressure compressor 14 is a radial compressor. Suitable compressors are manufactured, e.g. by MAN Turbo AG of Oberhausen, Germany. For optimal efficiency, both compressors are preferably capable of working to a high pressure and high temperatures (around 7500 kPa (75 bar) and 650°C). They should advantageously be able to function at a wide operational range with high efficiency and they should advantageously be compatible with short starter time and frequent starts, and be capable of operating with significant pressure and temperature gradients. Each compressor comprises a pressure relief valve 15 and a surrounding water jacket 13 for extraction of heat from the body of the compressor and in particular by extracting heat from the lubrication oil of each compressor 12, 14.

A further low pressure compressor (not shown) may feed into the system between the low pressure 12 and high pressure 14 compressors at point 31.

A condensate trap 35 is positioned between the high pressure compressor 14 and the thermal energy store 20. Water removed from the air at this point is stored in a reservoir 37.

The thermal energy store 20 comprises in this embodiment dried and settled salt deposits within a pressurised container. The container advantageously prevents material overspills into the turbine. For a large scale scheme such as that of the first embodiment, a thermal storage capacity of 120-1200 MWh and high heat extraction rates are desirable. The pressurised container holds a solid storage medium which in this embodiment comprises mined dried and settled salt deposits. Solid storage media provide a large surface area for heat transfer, while salt deposits are generally inexpensive and therefore are an attractive medium. Therefore, the energy store of this embodiment provides an effective way of removing and storing the heat of compression from the compressed air.

In further embodiments, alternative thermal energy storage is provided in the form of a solid state reservoir containing hygroscopic materials, for example those produced by ZAE Bayern, "Zeolite" or similar hygroscopic material.

A heat recovery circuit 17 circulates water that is pumped around the water jackets 13 and delivers the heated water to the heat recovery unit 18. A cooling interface 16 enables water to be fed in and out of the circuit 17. The heat recovery unit 18 incorporates a heat exchanger and, in this embodiment, a heat storage medium (e.g. dried and settled salt deposits within a pressurised container). Thus heat can be stored and selectively transferred to a heat supply circuit 19, which supplies the heat from the heat recovery unit 18 to the turbine 26.

The after-cooler 22 comprises an air/water heat exchanger located between the thermal store and the compressed air energy store 24 in the compressed air flow path. Water of a lower temperature than the corresponding air is passed through it, causing the water to be heated and the air to be cooled. The heated water feeds into the heat supply circuit 19.

The compressed air energy store 24 comprises, in this embodiment, an underground cavern 25, around 145m in height and 900m below ground level, created by salt mining. The deposits removed in the creation of the cavern 25 may be used in the thermal energy store 20. Caverns of this type present the only financially feasible storage means when considering large volume storage of which the applicant is presently aware for plants capable- of generating around 15MW of power or more. The cavern 25 is advantageously substantially cylindrical in shape, providing optimum pressure characteristics. Allowance should be made for approximately 530 cubic metres per MWh of energy to be generated. Other pre-existing caverns may also be used in other embodiments. For smaller schemes, fabricated storage vessels may be used.

The turbine 26 for the CAES system 10 should ideally be able to enable fast start-up, high power-ramps and high efficiency over a broad range of inlet pressures. Inlet pressures are likely to vary by a factor of two, making adaptive stages (common in gas turbines) desirable. A series of valves 27 control the turbine inlet pressure. Preferably, the air will be at 4100kPa (41 bar) and 565°C at the turbine inlet. Suitable turbines include those manufactured by Alstom Power of Holborn, London, UK.

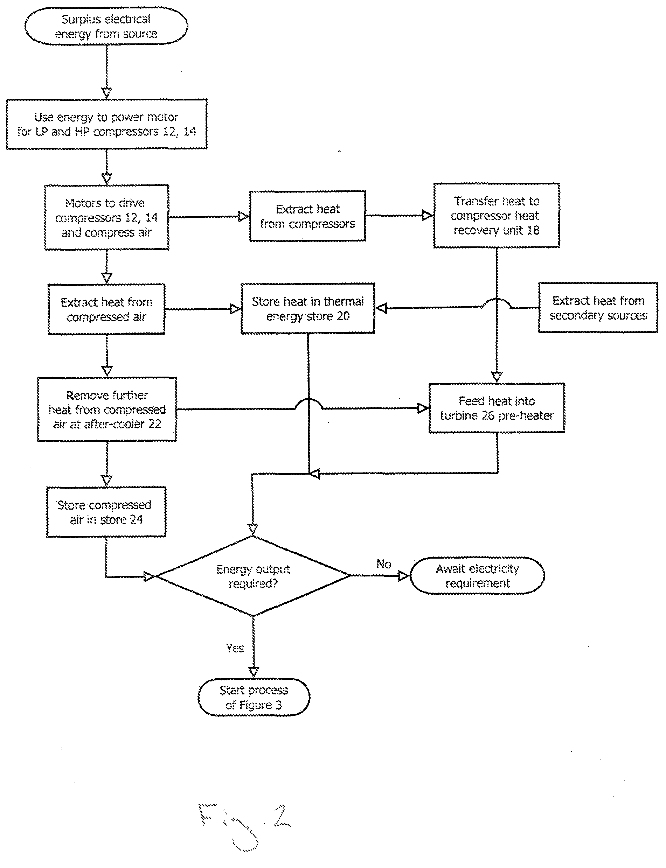

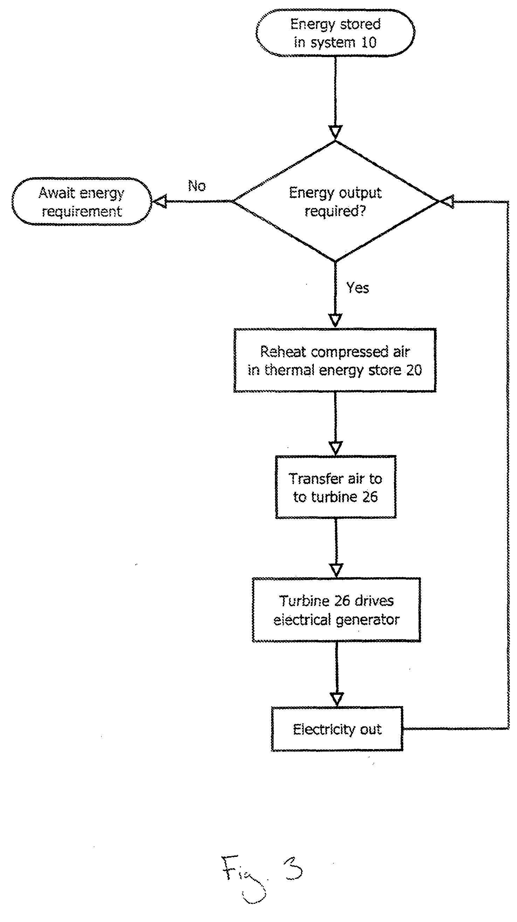

With reference to figures 2 and 3, in use, an electric motor powered by wind turbines or another source of renewable energy (not shown) powers electric motors to drive the compressors 12, 14. Ambient air is drawn into the low pressure compressor 12, and once compressed to a first pressure, the air is passed from the low pressure compressor 12 to the high pressure compressor 14. The pressure of the compressed air after the second stage is preferably in the order of 8600kPa. Water is pumped around the water jackets 13 in order to extract heat from the compressors 12, 14, preferably via the lubrication oil of the compressors, before being circulated to heat recovery unit 18 through a first set of heat recovery pipes 17. A second set of heat recovery pipes 19 transfer the heat from the heat recovery unit 18 to the turbine 26.

Condensate is removed from the pressurised air at the condensate trap 37. The pressurised air is cooled by its passage through the thermal energy store 20, and the extracted heat is stored in the thermal energy store. Additional heat may be supplied to the thermal energy store 20 from a secondary heat source such as waste electricity, waste heat from an industrial process, heat from solar panels, or waste chemical heat. The pressurised air is passed through the after-cooler 22, where further heat is recovered. The pressurised air is then transferred to the compressed air energy store 24. Waste heat recovered by the after-cooler 22 is transferred to the turbine 26 via heat supply circuit 19. At this stage, it is anticipated that the temperature of the compressed air has been reduced to around 50°C.

During times of peak energy demand, when the system 10 is required to supply energy to the power grid, a valve 29 downstream of the compressed air energy store 24 is opened to allow pressurised air to be removed from the compressed air energy store 24. The air is then heated by being passed through the thermal energy store 20. This ensures that, when expanded, the air does not cool the turbine 26 below its operating temperature range. The pressurised air is then passed through regulating valves 27 to enable the supply of compressed air to be "ramped up" and used to drive the turbine 26. The turbine 26 drives an electrical generator 28 to supply electrical energy as required.

Heat supplied from the heat recovery unit 18 and after-cooler 22 is used to selectively preheat the turbine 26 so that a fast start-up of the turbine 26 can be achieved. Once the turbine 26 is running, pre-heating is no longer required, since it is maintained in its operating temperature range by the amount of heat transferred to the air from the thermal energy store 20. In order to achieve fast start-up, both pre-heating and rotation of the turbine are required. Continuous rotation of the turbine 26 is thus maintained. A controller 33 regulates operation of the turbine 26 in response to the prevailing energy demand.

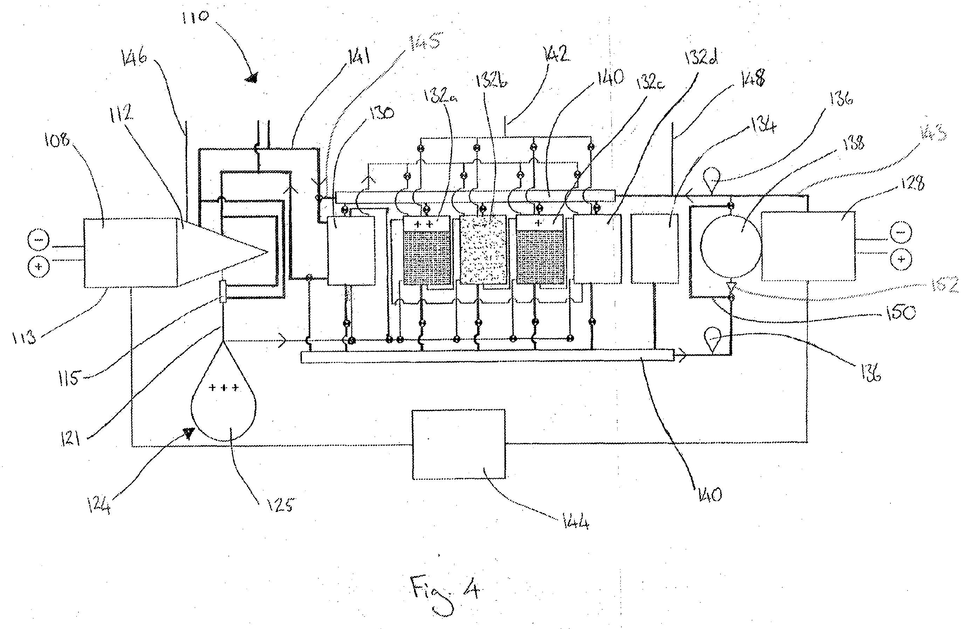

A second embodiment, which falls under the claimed invention, is shown in figures 4 to 6. Features which are substantially the same as those of the previous embodiment are given corresponding reference numbers with the additional prefix "1". By comparison with the first embodiment, this embodiment is substantially smaller scale. However, it will be appreciated that it may be scaled up in other embodiments to a variety of sizes. The second embodiment is simplified to the extent that only a single compressor and turbine are illustrated, whereas an actual plant would typically comprise multiple compressors and turbines in series and/or parallel.

Referring to Figure 4, the second embodiment of the present invention comprises a combined CAES system and generator 110 having an electric motor 108, a compressor 112, a heat exchanger 115, a compressed gas reservoir 124, a heat store 130, four water tanks 132a, 132b, 132c, 132d, a pressure accumulator 134, shock absorbers 136, a turbine 138, a generator 128 and a load bank 144. The compressor 112, the heat store 130 and the heat exchanger 115 form a first system linked by water pipes 141 (thicker lines) and fed through a pressure relief valve and inlet 146. Heat from secondary sources is added via the water pipes 141. A second system comprising the water tanks 132a-d and the turbine 138 is fed through a pressure relief valve and inlet 148 and linked by water pipes 143 (thicker lines). Water is circulated through the second system by liquid manifolds 140), while air travels along a compressed air flow path 121 (thinner lines). The two systems are linked by a water pipe 145. This pipe 145 enables the system to run should the heat exchanger 115 be out of commission.

As in the previous embodiment, the compressor 112 comprises a surrounding water jacket 113 for heat recovery from the body of the compressor 112 via the lubrication oil of the compressor 112.

The compressed air energy store 124 in this embodiment is similar to the compressed air energy store 24 of the previous embodiment, comprising an underground cavern 125 created by salt mining. In this embodiment, the compressed air energy store 124 is of approx. 25m³ at 30000 kPa.

The four water tanks 132a-d are arranged in configuration surrounding the pressure accumulator 134, to which they are each connected. In this embodiment, each of the water tanks 132a-d comprises a twin-walled cylinder 5m in diameter and 5m high. The inner wall of each tank 132a-d is perforated and the inner cylinder contains a honey-comb structure in order to reduce turbulence. The outer cavity allows air to pass rapidly through water contained in the tank 132a-d. Each tank 132a-d can advantageously be pressurised to 15000 kPa (150 bar). The pressure accumulator 134 comprises a circular drum approx. 5m in diameter under constant gravitational pressure. The liquid manifolds 140 connect the water tanks to the pressure accumulator 134 and the rest of the system. The heat store 130 comprises a tank approximately twice the size of each of the four water tanks 132a-d. The heat store 130 is a water reservoir pressurised to 1400kPa (14 bar) with an operating temperature of approximately 400°C. The heat store 130 receives heat from the compression process and secondary heat sources e.g. waste electricity, waste heat from an industrial process, heat from solar panels, or waste chemical heat. In alternative embodiments, the heat store may be a solid state reservoir containing hygroscopic materials such as those produced by ZAE Bayern (e.g. "Zeolite", or similar hygroscopic material).

The shock absorbers 136 are positioned up and downstream of the turbine. In this embodiment they comprise hydropneumatic accumulators designed to prevent sudden significant changes in pressure.

The turbine 138 in this embodiment is preferably a Pelton turbine, such as those manufactured by Voith Hydro of Heidenheim, Germany. A bypass valve arrangement 150 allows the pressurised water to bypass the turbine and generator in case of mechanical failure.

The load bank 144 regulates load on the turbine during start up.

An injector 152 is in this embodiment located upstream of the turbine 138 and downstream of the shock absorber 136. The injector 152 receives steam, compressed air and pressurised water and injects them into the turbine 138, improving efficiency.

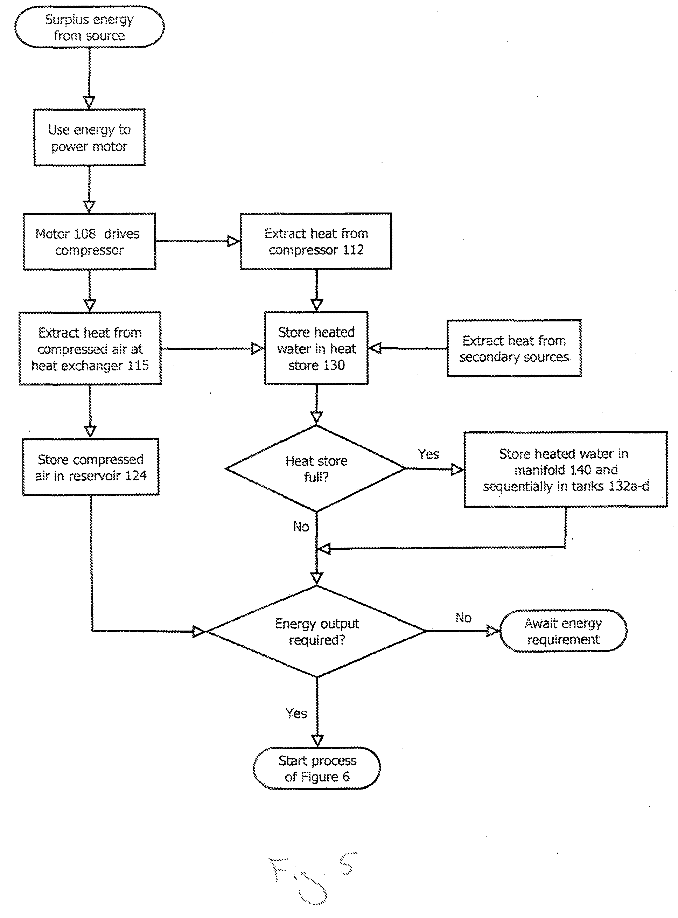

With reference to figure 5, in use, during a charging phase, the compressor 112 is driven by the electric motor 108, powered by surplus grid electricity or a renewable energy source to store energy. Heat is removed from the compressed air by the heat exchanger 115. The compressed air is then stored in the compressed air energy store 124. Heat is extracted from the compressor 112 via its lubricating oil and the water in the compressor jacket 113, which is then stored in the heat store 130 along with water from the heat exchanger 115. Heat from secondary heat sources is also stored. Water enters the systems through the water inlets 146, 148, although typically the system operates as a closed loop with the water being recirculated.

During this charging phase, the recovered heat may also be used to fill the manifolds 140 with heated pressurised water, the pressure accumulator 134 up to approximately 2/3 full with pressurised water, and up to two of tanks 132a - 132d with pressurised water. In addition, compressed air may be bubbled through the outer portion of one of the two filled tanks (as shown in Figure 4, tank 132c). It then passes in a heated state into tank 132a to pressurise it.

Figure 4 shows the four water tanks 132a, 132b, 132c, 132d holding various quantities of water. The first tank 132a is full of water, fully pressurised and ready for discharge into the pressure accumulator 134. The fourth tank 132d is empty and ready to receive return water from the turbine. The third tank, 132c is full of water and ready to be pressurised by compressed air from the reservoir 124 and steam from the heat store 130. The second tank 132b is being vented to atmosphere via exhaust vent 142. The system 110 is now in a fully charged state and is ready for operation.

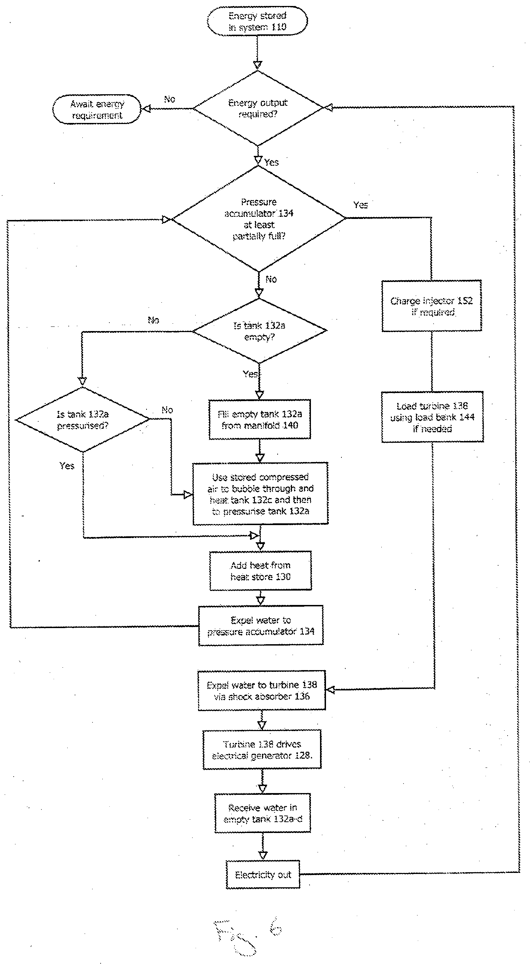

With reference to Figure 6, when electricity is required, an outlet valve is opened and water is expelled from the bottom of the tank 132a to the pressure accumulator 134 via the manifold 140. The water tanks 132a, 132b, 132c, 132d are emptied, filled and pressurised in turn in order to maintain constant pressure in the pressure accumulator 134, which is fed sequentially by the four water tanks 132. The air used to pressurise the water tanks 132 is expelled via an exhaust air vent when no longer required.

The pressurised, superheated water is expelled from the pressure accumulator 134 to the turbine 138, causing the turbine to drive and the generator 128 to generate electricity that may be supplied to the grid. Before reaching the turbine 138 the water flows past a shock absorber 136 so that no hammer effect is created. During start-up, electricity is taken from the grid or local supply and transferred to the load bank 144 in order to regulate the load on the turbine 138 so that the turbine's operating range is not exceeded. Water that has passed through the turbine 138 is returned to the manifold 140 and thereby rejoins the cycle, either by centering an empty one of tanks 132a-132d (as shown in Fig 4 132d), or to refill the heat store 130 if this requires replenishing.

It will be understood that numerous changes may be made within the scope of the present invention. In further embodiments of this invention, the combined CAES and generator may comprise a single or more than two stages of compression and more than one turbine and more than one compressor may be used, in series or parallel, or combinations of both. Heat extracted from the compressor or compressors may be stored before being used to heat the turbine on demand. The heat store may be heated electrically or by alternative means, some of which are described above, to augment the heat that may be extracted from the air and compressors. In the second embodiment, this may come from the load bank. In the second embodiment, the system may come into operation earlier in the charging phase, even if the manifold, tanks and pressure accumulator are not filled. The heat store may be omitted from the system of the second embodiment, or the system may operate without it being used (e.g. if it is under maintenance). Pressure on the pressure accumulator may be provided by springs. The turbine may be pre-heated from the thermal energy store. Alternative fluids such as glycol may be used in place of or in combination with water. Load control in the turbine 138 may be carried out with the use of the heat store 130 in place of the load bank 144, electronically or by monitoring, or by a combination of these methods.

The systems of the first and second embodiment may be located in the proximity of industries generating waste heat or electricity or other alternatives, and/or compressed air in order to incorporate them within the CAES process and put them to use. The heat recovery unit and thermal energy store of the first embodiment may be combined in a single unit.

In the second embodiment, heat from the compressor may be used to generate high pressure steam, kept as superheated pressurised water at 20000kPa (200 bar) within an insulated cylinder. This steam may then be injected via the injector 152 into the turbine in order to increase the final hydraulic discharge pressure. The steam may also be used to create negative pressure so that the pressure head across the turbine is increased. Expanding compressed air may be used to cool one of tanks 132a-d containing steam, thus condensing the superheated steam and creating negative pressure.

The sizes of the systems may be scaled up or down, as required.

## Claims

1. A compressed air energy storage system for supplying pressurised fluid to a turbine to generate electricity, comprising at least one compressor for compressing air, a thermal energy recovery system for recovering the heat of compression from the air, a thermal energy store (130), a compressed air energy store, a thermal energy introduction system to reintroduce heat to the air downstream of the compressed air energy store and a compressed air flow path connecting the at least one compressor and the compressed air energy store, and further comprising at least one water tank (132a-d) and a liquid flow path (140) configured to connect the at least one water tank (132a-d) to a turbine, wherein the compressed air is configured to pressurise the water and the pressurised water is configured to drive the turbine.

2. A compressed air energy storage system according (110) to claim 1 further comprising at least one turbine (138).

3. A compressed air energy storage system (110) according to claim 2 wherein the at least one turbine (138) is a Pelton turbine or similar.

4. A compressed air energy storage system (110) according to claim 2 or claim 3 further, comprising at least one hydraulic shock absorber (136) associated with the at least one turbine (138).

5. A compressed air energy storage system (110) according to any one of claims 2 to 4 wherein thermal energy from the thermal energy store (130) is suppliable to pre-heat the turbine.

6. A compressed air energy storage system (110) according to any preceding claim wherein the thermal energy store (130) comprises a solid heat storage material, preferably wherein the thermal energy store (130) comprises dried and settled salt deposits.

7. A compressed air energy storage system (110) according to any preceding claim wherein the at least one compressor (112) is a reciprocating compressor.

8. A compressed air energy storage system (110) according to any preceding claim wherein the thermal energy recovery system includes a recovery device for extracting excess heat directly from the body of the compressor.

9. A compressed air energy storage system (110) according to claim 8 wherein the thermal energy recovery system further comprises a heat exchanger (115) to recover heat from the compressed air.

10. A compressed air energy storage system (110) according to claim 8 or claim 9 wherein the thermal energy recovery system (115) comprises a portion of the flow path arranged to pass through the thermal energy store (130).

11. A compressed air energy storage system (110) according to claim 10 when dependent upon claim 9 wherein the heat exchanger (115) is an after-cooler located downstream of the thermal energy store (130).

12. A method of operating a compressed air energy storage system (110) according to claim 1 comprising the steps of
a) compressing air;
b) recovering thermal energy directly and/or indirectly from the compressed air;
c) obtaining thermal energy from an external source;
d) storing the thermal energy in a thermal energy store (130);
e) storing the compressed air in a compressed air energy store (124); and
f) selectively using the energy stored in the compressed air energy store (124) and the thermal energy store (130) to drive a turbine (138) using pressurised water.

13. A method of operating a compressed air energy storage system (110) according to claim 12 wherein in step a) thermal energy is recovered directly from the body of the compressor (112).

14. A method of operating a compressed air energy storage system (110) according to claim 13 wherein thermal energy is recovered directly from the body of the compressor (112) by means of water circulation.

15. A method of operating a compressed air energy storage system (110) according to claim 12 or claim 13 comprising a further step of selectively using the thermal energy recovered to preheat the turbine (138).

## Patentansprüche

1. Druckluftenergiespeichersystem zum Zuführen von unter Druck stehendem Fluid an eine Turbine zum Erzeugen von Elektrizität, das mindestens einen Kompressor zum Komprimieren von Luft, ein Rückgewinnungssystem für thermische Energie zum Rückgewinnen der Kompressionswärme der Luft, einen Speicher (130) für thermische Energie, einen Speicher für Druckluftenergie, ein System zum Einführen thermischer Energie zum Wiederabgeben von Wärme an die Luft stromab des Speichers für Druckluftenergie und einen Druckluftflussweg umfasst, der den mindestens einen Kompressor und den Speicher für Druckluftenergie verbindet, und weiter mindestens einen Wassertank (132a-d) und einem Flüssigkeitsflussweg (140) umfasst, der dazu aufgebaut ist, den mindestens einen Wassertank (132a-d) mit einer Turbine zu verbinden, wobei die Druckluft dazu verwendbar ist, das Wasser unter Druck zu setzen und das unter Druck gesetzte Wasser dazu verwendbar ist, die Turbine anzutreiben.

2. Druckluftenergiespeichersystem (110) nach Anspruch 1, weiter mit mindestens einer Turbine (138).

3. Druckluftenergiespeichersystem (110) nach Anspruch 2, wobei die mindestens eine Turbine eine Pelton-Turbine oder dergleichen ist.

4. Druckluftenergiespeichersystem (110) nach Anspruch 2 oder Anspruch 3, weiter mit mindestens einem Hydraulikstoßdämpfer (136), der mit der mindestens einen Turbine verbunden ist.

5. Druckluftenergiespeichersystem (110) nach einem der Ansprüche 2 bis 4, wobei die thermische Energie vom Speicher (130) für thermische Energie bereitstellbar ist, um die Turbine vorzuheizen.

6. Druckluftenergiespeichersystem (110) nach einem der vorstehenden Ansprüche, wobei der Speicher (130) für thermische Energie ein festes Wärmespeichermaterial enthält, wobei der Speicher (130) für thermische Energie vorzugsweise getrocknete und abgesetzte Salzablagerungen enthält.

7. Druckluftenergiespeichersystem (110) nach einem der vorstehenden Ansprüche, wobei der mindestens eine Kompressor (112) ein Kolbenkompressor ist.

8. Druckluftenergiespeichersystem (110) nach einem der vorstehenden Ansprüche, wobei das System zur Rückgewinnung thermischer Energie eine Rückgewinnungsvorrichtung aufweist, um überschüssige Wärme direkt vom Hauptteil des Kompressors zu extrahieren.

9. Druckluftenergiespeichersystem (110) nach Anspruch 8, wobei das System zur Rückgewinnung thermischer Energie weiterhin einen Wärmetauscher (115) umfasst, um Wärme aus der komprimierten Luft zurückzugewinnen.

10. Druckluftenergiespeichersystem (110) nach Anspruch 8 oder Anspruch 9, wobei das System (115) zur Rückgewinnung thermischer Energie einen Abschnitt des Flusswegs umfasst, der dazu angeordnet ist, durch den thermischen Energiespeicher (130) zu gehen.

11. Druckluftenergiespeichersystem (110) nach Anspruch 10 abhängig von Anspruch 9, wobei der Wärmetauscher (115) ein Nachkühler ist, der stromab des Speichers (130) für thermische Energie angeordnet ist.

12. Verfahren zum Betreiben eines Druckluftenergiespeichersystems (110) nach Anspruch 1, mit den Schritten
a) Komprimieren von Luft;
b) Zurückgewinnen von thermischer Energie direkt und/oder indirekt aus der komprimierten Luft;
c) Erhalten von thermischer Energie aus einer externen Quelle;
d) Speichern der thermischen Energie in einem Speicher (130) für thermische Energie;
e) Speichern der Druckluft in einem Druckluftenergiespeicher (124); und
f) selektives Nutzen der in dem Druckluftenergiespeicher (124) und dem thermischen Energiespeicher (130) gespeicherten Energie zum Antreiben einer Turbine (138) unter Verwendung von unter Druck stehendem Wasser.

13. Verfahren zum Betreiben eines Druckluftspeichersystems (110) nach Anspruch 12, wobei in Schritt a) thermische Energie direkt aus dem Hauptteil des Kompressors (112) zurückgewonnen wird.

14. Verfahren zum Betreiben eines Druckluftspeichersystems (110) nach Anspruch 13, wobei thermische Energie direkt aus dem Hauptteil des Kompressors (112) mittels Wasserumlauf zurückgewonnen wird.

15. Verfahren zum Betreiben eines Druckluftspeichersystems (110) nach Anspruch 12 oder Anspruch 13, weiter mit einem Schritt des selektiven Nutzens der zurückgewonnenen thermischen Energie zum Vorheizen der Turbine (138).

## Revendications

1. Système de stockage d'énergie à air comprimé pour fournir un fluide pressurisé à une turbine afin de générer de l'électricité, comprenant au moins un compresseur pour comprimer l'air, un système de récupération d'énergie thermique pour récupérer la chaleur de compression de l'air, un stockage d'énergie thermique (130), un stockage d'énergie à air comprimé, un système d'introduction d'énergie thermique pour réintroduire de la chaleur dans l'air en aval du stockage d'énergie à air comprimé et un chemin d'écoulement de l'air comprimé reliant ledit au moins un compresseur et le stockage d'énergie à air comprimé, et comprenant en outre au moins un réservoir d'eau (132a-d) et un chemin d'écoulement liquide (140), configuré pour relier ledit au moins un réservoir d'eau (132a-d) à une turbine, dans lequel l'air comprimé est configuré pour pressuriser l'eau et l'eau pressurisée est configurée pour entraîner la turbine.

2. Système de stockage d'énergie à air comprimé (110) selon la revendication 1, comprenant en outre au moins une turbine (138).

3. Système de stockage d'énergie à air comprimé (110) selon la revendication 2, dans lequel ladite au moins une turbine (138) est une turbine Pelton ou similaire.

4. Système de stockage d'énergie à air comprimé (110) selon la revendication 2 ou la revendication 3, comprenant en outre au moins un absorbeur de choc hydraulique (136) associé à la au moins une turbine (138).

5. Système de stockage d'énergie à air comprimé (110) selon l'une quelconque des revendications 2 à 4, dans lequel de l'énergie thermique provenant du stockage d'énergie thermique (130) peut être fournie pour préchauffer la turbine.

6. Système de stockage d'énergie à air comprimé (110) selon l'une quelconque des revendications précédentes, dans lequel le stockage d'énergie thermique (130) comprend un matériel de stockage de chaleur solide, de préférence dans lequel le stockage d'énergie thermique (130) comprend des dépôts de sel séchés et sédimentés.

7. Système de stockage d'énergie à air comprimé (110) selon l'une quelconque des revendications précédentes, dans lequel le au moins un compresseur (112) est un compresseur à mouvements alternatifs.

8. Système de stockage d'énergie à air comprimé (110) selon l'une quelconque des revendications précédentes, dans lequel le système de récupération d'énergie thermique comprend un dispositif de récupération pour extraire l'excès de chaleur directement du corps du compresseur.

9. Système de stockage d'énergie à air comprimé (110) selon la revendication 8, dans lequel le système de récupération d'énergie thermique comprend en outre un échangeur de chaleur (115) pour récupérer la chaleur de l'air comprimé.

10. Système de stockage d'énergie à air comprimé (110) selon la revendication 8 ou la revendication 9, dans lequel le système de récupération d'énergie thermique (115) comprend une partie du chemin d'écoulement agencé pour passer à travers le stockage d'énergie thermique (130).

11. Système de stockage d'énergie à air comprimé (110), selon la revendication 10 quand elle dépend de la revendication 9, dans lequel l'échangeur de chaleur (115) est un réfrigérant complémentaire, situé en aval du stockage d'énergie thermique (130).

12. Procédé de fonctionnement d'un système de stockage d'énergie à air comprimé (110) selon la revendication 1 comprenant les étapes consistant à
a) comprimer l'air ;
b) récupérer l'énergie thermique directement et/ou indirectement de l'air comprimé ;
c) obtenir de l'énergie thermique d'une source extérieure ;
d) stocker l'énergie thermique dans un stockage d'énergie thermique (130) ;
e) stocker l'air comprimé dans un stockage d'énergie d'air comprimé (124) ; et
f) utiliser sélectivement l'énergie stockée dans le stockage d'énergie à air comprimé (124) et le stockage d'énergie thermique (130) pour entraîner une turbine (138) en utilisant de l'eau pressurisée.

13. Procédé de fonctionnement d'un système de stockage d'énergie à air comprimé (110) selon la revendication 12, dans lequel dans l'étape a), l'énergie thermique est récupérée directement depuis le corps du compresseur (112).

14. Procédé de fonctionnement d'un système de stockage d'énergie à air comprimé (110) selon la revendication 13, dans lequel l'énergie thermique est récupérée directement depuis le corps du compresseur (112) au moyen de circulation d'eau.

15. Procédé de fonctionnement d'un système de stockage d'énergie à air comprimé (110) selon la revendication 12 ou la revendication 13, comprenant une étape supplémentaire consistant à utiliser sélectivement l'énergie thermique récupérée pour préchauffer la turbine (138).
